# EUROPÄISCHE PATENTANMELDUNG

(11) **EP 2 574 831 A1**
(43) Veröffentlichungstag der Anmeldung: **03.04.2013**
(21) Anmeldenummer: 12181144.2
(22) Anmeldetag: 21.08.2012
(51) Int. Cl.: F16K 31/52, F16K 31/04, F02M 25/07

(54) **Stellvorrichtung**

(30) Priorität: 30.09.2011 DE 102011054085
(71) Anmelder: Pierburg GmbH, 41460 Neuss (DE)
(72) Erfinder: Schäfer, Michael, 16766 Kremmen (DE); Nowak, Martin, 51379 Leverkusen (DE); Breuer, Michael, 52152 Simmerath (DE); Tönnesmann, Andres, 52066 Aachen (DE); Köster, Andreas, 45149 Essen (DE)
(74) Vertreter: Patentanwälte ter Smitten Eberlein Rütten Partnerschaftsgesellschaft

(57) **Zusammenfassung**

Stellvorrichtung (10) mit einem Antriebselement (12), das rotatorisch bewegbar ist und über Kupplungsglieder eine im Wesentlichen translatorische Bewegung eines Stellelements (14) bewirkt sind prinzipiell bekannt. Durch Fertigungs- und Montagetoleranzen können Verspannungen quer zur Hauptbewegungsrichtung des Stellelements (14) auftreten die alle Bauteile extrem belasten.

Es wird daher erfindungsgemäß vorgeschlagen, dass das Stellelement (14) um eine Schwenkachse (30) die senkrecht auf der Ebene steht, die durch die Hauptbewegungsrichtung des Stellelements (14) und die Drehachse des Antriebselement (12) aufgespannt ist, um seinen Aufhängepunkt schwenkbar gelagert ist.

## Beschreibung

Die Erfindung betrifft eine Stellvorrichtung mit einem Antriebselement, das rotatorisch bewegbar ist und über Kupplungsglieder eine im Wesentlichen translatorische Bewegung eines Stellelements bewirkt.

Derartige Stellvorrichtungen können im Bereich des Kraftfahrzeugbaus in einer Vielzahl von Anwendungen im Bereich des Verbrennungsmotors verwendet werden. So können beispielsweise Abgasrückführventile, Waste-Gate-Ventile, Registerklappen oder VTG-Steller mittels derartiger Stellvorrichtungen angetrieben werden.

Diese Stellvorrichtungen weisen einen Elektromotor als Antriebseinheit auf, über den ein Getriebe und folgend ein Exzenter angetrieben wird. Der Exzenter ist mit einer Kulisse in einem rotatorisch wirkenden Antriebsetement wirkverbunden, über das die Bewegung des Elektromotors in eine im Wesentlichen lineare Bewegung eines Versteflelements umgewandelt wird. Im Gegensatz zu linearen, pneumatisch oder elektromagnetisch betätigten Stellern ermöglichen durch Elektromotoren rotatorisch betätigende Steller eine feinere Positionierung des nachgeschalteten Stellelements sowie eine höhere Stellkraft durch Variation des rotatorischen Hebels, welche durch das zwischengeschaltete Getriebe noch erhöht werden kann.

Aus verschiedenen Gründen ist es sinnvoll, die rotatorische Bewegung nicht in eine ausschließlich lineare Bewegung des nachgeschalteten Stellelements umzuwandeln, sondern auch radiale Bewegungsanteile zuzulassen was unter anderem Produktions- und Montagekosten senkt.

In der US 6 886 546 B1 wird ein rotatorisch betätigtes Hub-Ventil offenbart, dessen Ventilstange nicht ausschließlich translatorisch bewegt und in einem Gleitlager geführt wird, sondern auch radial zur Hauptbewegungsrichtung Bewegungsanteile aufweist.

Aufgrund von Fertigungstoleranzen ist aber ein gewisser Versatz zwischen den die rotatorische Bewegung produzierenden und übertragenden Komponenten und dem im Wesentlichen translatorisch wirkenden Stellelement nicht zu vermeiden. Dadurch werden Spannungen produziert, welche alle Komponenten stärker belasten und bis zum Totalausfall der gesamten Stellvorrichtung führen können.

Es stellt sich daher die Aufgabe, eine Stellvorrichtung mit einem Antriebselement, das rotatorisch bewegbar ist und über Kupplungsglieder eine im Wesentlichen translatorische Bewegung eines Stellelements bewirkt, zu schaffen, bei der der Versatz zwischen Antriebselement, den einzelnen Kupplungsgliedern und dem Stellelement ausgeglichen wird und dadurch Verspannungen vermieden werden.

Diese Aufgabe wird durch den kennzeichnenden Teil des Hauptanspruchs gelöst,

Dadurch, dass das Stellelement um eine Schwenkachse, die senkrecht auf der Ebene steht, die durch die Hauptbewegungsrichtung des Stellelements und die Drehachse des Antriebselements aufgespannt ist, an seinem Aufhängepunkt schwenkbar gelagert ist, wird die Belastung der einzelnen Komponenten und somit der gesamten Stellvorrichtung verringert und deren Haltbarkeit und Ausfatfsicherheit erhöht. Des Weiteren ergibt sich durch die Verschwenkbarkeit eine höhere Flexibilität in der Positionierung der Stellvorrichtung im vorhandenen Bauraum. Außerdem kann mit größeren Toleranzen gefertigt werden.

In einer vorteilhaften Ausführungsform der Erfindung weist die Schwenkeinrichtung einen zylindrischen Lagerzapfen auf, dessen Längsmittelachse parallel zur Drehachse ist. Dadurch ist die Schwenkeinrichtung leicht Zusammenbau- und montierbar.

In einer optimierten Variante weist die Schwenkeinrichtung eine Buchse auf, die auf dem Lagerzapfen angeordnet ist und gegen axiales Verschieben gesichert ist. Dadurch wird ein Verschwenken des Stellelements um die Längsmittelachse des Lagerzapfens ohne größeren Verschleiß ermöglicht.

In einer weiterführenden bevorzugten Ausführungsform ist die Buchse kugelringförmig ausgebildet und ein geformtes Durchgangsloch im Antriebselement weist eine zur Außenkontur der Buchse korrespondierende Innenkontur auf. Hierdurch wird ein geführtes, reibungsarmes Schwenken bei zugleich spielfreier Kraftübertragung auf das Stellelement ermöglicht.

In einer hierzu weiterführenden Ausführungsform ist die Buchse aus Kunststoff gefertigt und die Innenkontur ist direkt in dem geformten Durchgangsloch im Antriebselement ausgebildet. Durch die Verwendung einer selbstschmierenden Kunstoffbuchse kann auf eine zusätzliche Schmierung der Gleitfläche verzichtet werden. Außerdem werden keine weiteren Bauteile für die Schwenkfunktion benötigt.

In einer alternativen vorteilhaften Ausgestaltung ist die Buchse aus Stahl gefertigt und die Innenkontur ist in einer in das Antriebselement eingepressten Führungsbuchse ausgeformt. Das hat den Vorteil, dass die Stellvorrichtung auch an thermisch hochbelasteten Positionen eingesetzt werden kann.

In einer vorteilhaften Ausführungsform ragt der Lagerzapfen mindestens an einer Seite in eine Bohrung im Stangenkopf hinein. Hierdurch wird die Stellbewegung auf einfache Art und Weise vom Stangenkopf auf das Stellelement übertragen.

In einer weiterführenden bevorzugten Ausführungsform weist der Stangenkopf ein U-förmiges Profil auf und der Lagerzapfen ragt in einander gegenüberliegende Bohrungen in Schenkeln des Stangenkopfes hinein, wobei das Antriebselement in den Raum zwischen den beiden Schenkeln des Stangenkopfs hineinragt. Durch diese Bauform werden Biegemomente bei der translatorischen Bewegung des Stellelementes vermieden.

In einer vorteilhaften Ausführungsform ist die Buchse gleitfähig auf dem Lagerzapfen angeordnet. Hierdurch werden die zueinander orthogonalen Anteile der Schwenkbewegung auf zwei unterschiedliche Gleitflächen aufgeteilt, wodurch die Belastung der einzelnen Gleitflächen verringert wird.

In einer alternativen vorteilhaften Ausführungsform ist die Buchse gleitfähig in dem Antriebselement angeordnet. Verteilhaft daran ist, dass nur zwei Oberflächen bearbeitet werden müssen.

In einer anderen bevorzugten Ausführungsform wird die rotatorische Bewegung des Antriebselements von einem Elektromotor durch ein Getriebe über einen Exzenter auf das Antriebselements übertragen. Das hat den Vorteil, dass durch die Untersetzung durch das Getriebe die Stellgenauigkeit erhöht wird. Zusätzlich wird das Moment der rotatorischen Bewegung erhöht, ohne die Leistung des Motors erhöhen zu müssen.

In einer weiteren bevorzugten Ausführungsform sind der Stangenkopf, das Stellelement, der Lagerzapfen, die Buchse und das Antriebselement vormontiert in das Gehäuse einsetzbar. Das hat den Vorteil, dass die Montage erleichtert wird.

Somit wird eine Stellvorrichtung geschaffen, die Fertigungs- und Montagetoleranzen kompensieren kann und dadurch die Lebensdauer und Haltbarkeit aller Komponenten erhöht und gleichzeitig eine leichte Montage ermöglicht.

Weitere wesentliche Merkmale und eine bevorzugte Ausführungsform wird im Folgenden anhand der Figuren beschrieben.
Figur 1 zeigt eine Seitenansicht einer erfindungsgemäßen Stellvorrichtung in geschnittener Darstellung.

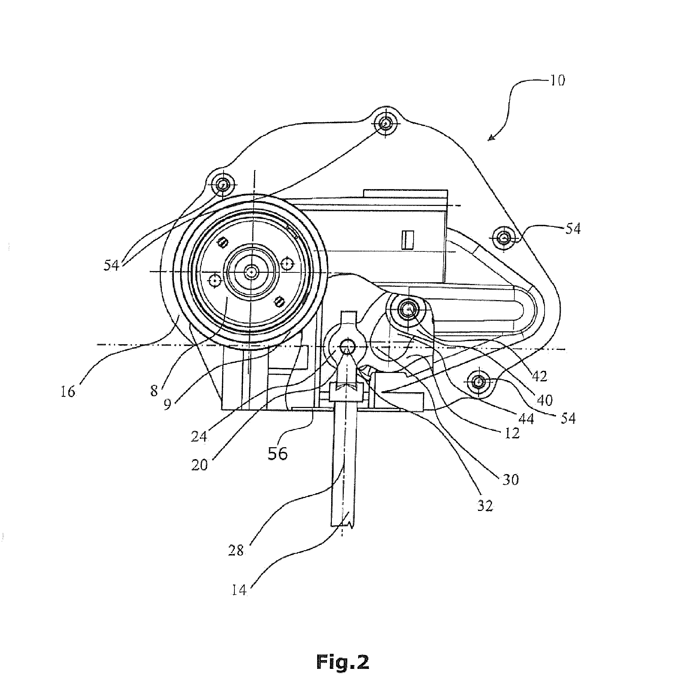

Figur 2 zeigt eine Seitenansicht der erfindungsgemäßen Stellvorrichtung der Figur 1 in teilgeschnittener Darstellung.

Eine Stellvorrichtung 10 besteht aus einem mindestens zweiteiligen Gehäuse 16, in dem ein als Antriebseinheit 8 dienender Elektromotor in einer entsprechend ausgeformten Aufnahme 9 des Gehäuses 16 angeordnet ist. Das Gehäuse 16 ist zweiteilig ausgebildet wobei die beiden Gehäusehälften beispielsweise durch Gehäuseschrauben 54 fest miteinander verbunden sind.

Die Antriebseinheit 8 treibt über ein nicht dargestelltes Getriebe eine nicht dargestellte Antriebswelle an, auf der ein Exzenter 40 befestigt ist, an dessen gegenüberliegendem Ende ein Exzenterausgangsbolzen 42 befestigt ist, der parallel zur Antriebswelle verläuft, so dass die Antriebswelle, der Exzenterausgangsbolzen 42 und der Exzenter 40 eine Kurbel bilden.

Auf dem Exzenterausgangsbolzen 42 ist ein nicht dargestelltes Lager angeordnet, das in einer Kulisse 44 eines Antriebetements 12 abläuft.

Das Antriebselement 12 ist im Wesentlichen scheibenförmig ausgebildet und weist an einem ersten nicht sichtbaren Endbereich eine Bohrung auf, durch die eine Drehachse in Form eines in Lagern drehbar gelagerten Bolzens ragt, der fest mit dem Antriebselement 12 verbunden ist, so dass das Antriebselement 12 über die Lager in seiner Erstreckungsebene drehbar gelagert ist.

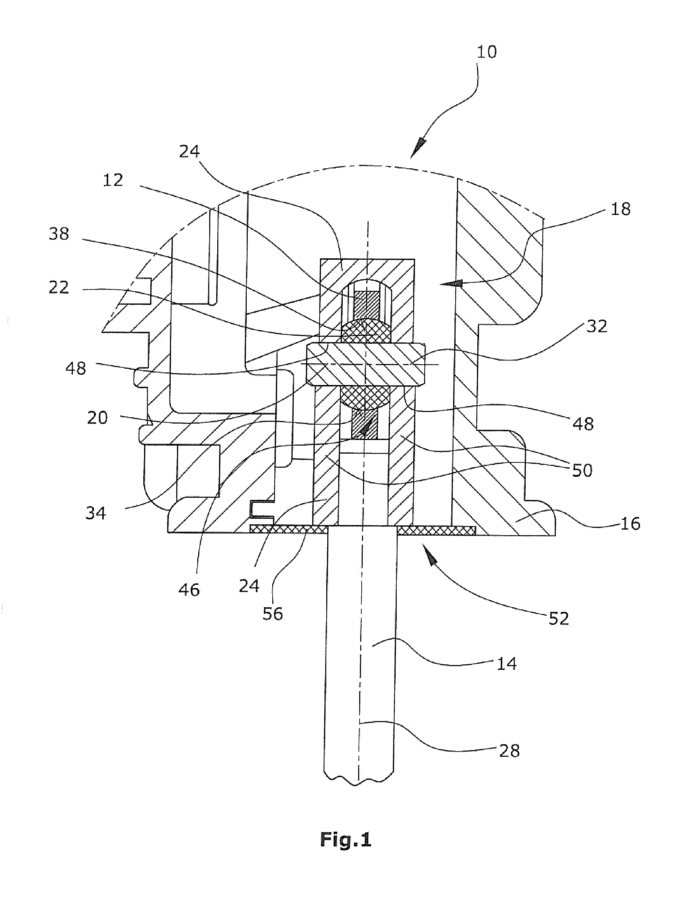

Im Antriebselement 12 ist ein geformtes Durchgangsloch 46 ausgebildet, das eine kreisbogenförmige Innenkontur 38 aufweist, wie in Figur 1 zu sehen ist. In diesem geformten Durchgangsloch 46 ist eine kugelringförmige Buchse 22 aus Kunststoff angeordnet, die eine, zur kreisbogenförmigen Innenkontur 38 des geformten Durchgangslochs 46 korrespondierende Außenkontur 34 aufweist, wodurch die Buchse 22 im geformten Durchgangsloch 46 im Antriebselement 12 um die Schwenkachse 30 schwenkbar ist. In der Buchse 22 ist ein zylindrischer Lagerzapfen 20 drehbar angeordnet, der dieselbe Längsmittelachse 32 wie die Buchse 22 aufweist. Der Lagerzapfen 20 ragt beidseitig in Bohrungen 48 in Schenkeln 50 eines U-förmig ausgebildeten Stangenkopfes 24 und ist mit diesem fest verbunden. Die Buchse 22 ist gegen axiales Verschieben durch die beidseitig an der Buchse anliegenden Schenkel 50 des Stangenkopfes 24 gesichert. An den freien Enden der Schenkeln 50 des Stangenkopfes 24 ist ein Stellelement 14 mit einer Mittelachse 28 fest mit dem Stangenkopf 24 verbunden, Das Stellelement 14 ragt mit seinem, zum Stangenkopf 24 entgegengesetzten Ende durch eine Gehäuseöffnung 52 nach außen. Die Gehäuseöffnung 52 ist im Wesentlichen als Durchgangsbohrung ausgeführt, deren Durchmesser jedoch größer ist als der Durchmesser des Stellelements 14, so dass dieses in der Gehäuseöffnung 52 eine Kippbewegung ausführen kann. Die Gehäuseöffnung 52 ist durch einen in der Gehäuseöffnung 52 im Gehäuse 16 fixierten Elastomerring 56 verschlossen, der das Stellelement 14 radial umschließt und zugleich die Kippbewegung des Stellelements 14 zulässt. Eine Abdichtung mittels einer zwischen zwei Blechscheiben aufgenommenen, verschiebbar angeordneten Teflonscheibe ist ebenfalls denkbar. Das dem Stangenkopf 24 gegenüberliegende Ende des Stellelements 14 ist mit einem nicht dargestellten Ventil in einem nicht dargestellten Ventilgehäuse verbunden.

Wird nun die Antriebseinheit 8 betätigt, wird über das Getriebe die Antriebswelle und mit ihr der Exzenter 40 rotatorisch betätigt. Damit bewegt sich der Exzenterausgangsbolzen 42 auf einem Kreisbogen um die Antriebswelle, wobei das auf dem Exzenterausgangsbolzen 42 angeordnete Lager in der Kulisse 44 abläuft, wodurch das Antriebselement 12 um seine Drehachse gedreht wird. Die, in dem geformten Durchgangsloch 46 im Antriebselement 12 geführte Buchse 22 wird dadurch auf einer Kreisbogenbahn um die Drehachse des Antriebselements 12 bewegt.

Die Drehachse und die Buchse 22 sind derart angeordnet, dass die Kreisbogenbahn, entlang der sich die Buchse 22 bewegt, eine deutlich größere Komponente in Hauptbewegungsrichtung des Stellelements 14 aufweist als in einer senkrecht hierzu stehenden Richtung. Entsprechend wird das Stellelement 14 über den Stangenkopf 24 und die Buchse 22 entlang der Mittelachse 28 bewegt. Es entsteht jedoch gleichzeitig durch die Kreisbogenbahn eine geringe Kippbewegung.

Durch Fertigungs- und Montagetoleranzen kann nun ein Versatz entstehen, so dass die Bewegungsrichtung des Stellelement 14 nicht mehr in der Erstreckungsebene des Antriebselements 12 liegt: Stangenkopf 24, Lagerzapfen 20, Buchse 22 und Stellelement 14 schwenken in diesem Fall um den oberen Lagerungspunkt.

Der zweite Lagerungspunkt des Stellelements 14 kann zum Beispiel ein Ventil in einem Gehäuse sein. Der Spannungen produzierende Versatz zwischen dem Gehäuse 16 und damit dem im Gehäuse 16 angeordneten Stellelement 14 einerseits und dem Ventilgehäuse mit dem Ventil andererseits, wird ebenso durch das Schwenken um den oberen Lagerungspunkt ausgeglichen.

Durch die Außenkontur 34 der Buchse 22 und die Innenkontur 38 des geformten Durchgangslochs 46 im Antriebselement 12 wird eine Gleitfläche geschaffen die ein Schwenken der Buchse 22 um die Schwenkachse 30, die senkrecht auf der Ebene steht, die durch die Hauptbewegungsrichtung des Stellelements 14 und die Drehachse des Antriebselement 12 aufgespannt wird, ermöglicht. Zugleich erlaubt die Gleitfläche zwischen dem Lagerzapfen 20 und der Buchse 22 ein Schwenken um die Längsmittelachse 32 des Lagerzapfens 20. Hierdurch wird der Spannungen erzeugende Versatz ausgeglichen und dadurch die Belastung aller Komponenten verringert.

Um die Montage zu vereinfachen, können einzelne Komponenten vormontiert werden. Dazu wird die Buchse 22 in dem geformten Durchgangsloch 46 im Antriebselement 12 platziert und dann der Stangenkopf 24 so angeordnet, dass die Bohrungen 48 des Stangenkopfes 24 und die Mittelbohrung der Buchse 22 fluchten, so dass der Lagerzapfen 20 durch die Bohrungen 48 gesteckt und in diesen fixiert werden kann. Der Stangenkopf 24 ist fest mit dem Stellelement 14 verbunden, so dass eine vormontierte Einheit aus Antriebselement 12, Buchse 22, Stangenkopf 24 und Stellelement 14 entsteht. Diese wird in dem geöffneten Gehäuse 16 positioniert, welches daraufhin geschlossen und verschraubt wird.

Denkbar wäre es auch, den zweiten Lagerungspunkt des Stellelements 14 mit einer erfindungsgemäßen Schwenkeinrichtung zu versehen, was besonders sinnvoll ist, wenn das angeschlossene Ventil ausschließlich transfatonsche bewegt wird.

Es sollte deutlich sein, dass der Schutzbereich der vorliegenden Anmeldung nicht auf das beschriebene Ausführungsbeispiel beschränkt ist.

## Patentansprüche

1. Stellvorrichtung (10) mit einem Antriebselements (12), das rotatorisch bewegbar ist und über Kupplungsglieder eine im Wesentlichen translatorische Bewegung eines Stellelements (14) bewirkt,
**dadurch gekennzeichnet, dass**
das Stellelement (14) um eine Schwenkachse (30) die senkrecht auf der Ebene steht, die durch die Hauptbewegungsrichtung des Stellelements (14) und die Drehachse des Antriebselements (12) aufgespannt ist, an seinem Aufhängepunkt schwenkbar gelagert ist.

2. Stellvorrichtung nach Anspruch 1,
**dadurch gekennzeichnet, dass**
eine Schwenkeinrichtung (18) einen zylindrischen Lagerzapfen (20) aufweist, dessen Längsmittelachse (32) parallel zur Drehachse des Antriebselements (12) ist.

3. Stellvorrichtung nach Anspruch 2,
**dadurch gekennzeichnet, dass**
die Schwenkeinrichtung (18) eine Buchse (22) aufweist, die auf dem Lagerzapfen (20) angeordnet ist und gegen axiales Verschieben gesichert ist.

4. Stellvorrichtung nach Anspruch 3,
**dadurch gekennzeichnet, dass**
die Buchse (22) kugelringförmig ausgebildet ist und ein geformtes Durchgangsloch (46) im Antriebselement (12) eine zur Außenkontur (34) der Buchse (22) korrespondierende Innenkontur (38) aufweist.

5. Stellvorrichtung nach Anspruch 4,
**dadurch gekennzeichnet, dass**
die Buchse (22) aus Kunststoff gefertigt ist.

6. Stellvorrichtung nach Anspruch 4,
**dadurch gekennzeichnet, dass**
die Buchse (22) aus Stahl gefertigt ist und die Innenkontur (38) in einer, in das Antriebselement (12) eingepressten Führungsbuchse ausgebildet ist.

7. Stellvorrichtung nach Anspruch 5 oder 6,
**dadurch gekennzeichnet, dass**
der Lagerzapfen (20) mindestens an einer Seite in einen Stangenkopf (24) hineinragt.

8. Stellvorrichtung nach Anspruch 7,
**dadurch gekennzeichnet, dass**
der Stangenkopf (24) als U-förmiges Profil ausgebildet ist und der Lagerzapfen (20) in Bohrungen (48) in Schenkeln (50) des Stangenkopfes (24) hineinragt, wobei das Antriebselement (12) zwischen die beiden Schenkel (50) des Stangenkopfes (24) ragt.

9. Stellvorrichtung nach einem der vorangegangenen Ansprüche, **dadurch gekennzeichnet, dass**
die Buchse (22) gleitfähig auf dem Lagerzapfen (20) angeordnet ist.

10. Stellvorrichtung nach einem der Ansprüche 1 bis 7,
**dadurch gekennzeichnet, dass**
die Buchse (22) gleitfähig in dem geformten Durchgangsloch (46) im Antriebselement (12) angeordnet ist.

11. Stellvorrichtung nach einem der vorangegangenen Ansprüche, **dadurch gekennzeichnet, dass**
die rotatorische Bewegung des Antriebselements (12) von einem Elektromotor durch ein Getriebe über einen Exzenter (40) auf das Antriebselements (12) übertragbar ist.

12. Stellvorrichtung nach einem der vorangegangenen Ansprüche, **dadurch gekennzeichnet, dass**
der Stangenkopf (24), das Stellelement (14), der Lagerzapfen (20), die Buchse (22) und das Antriebselement (12) vormontiert in das Gehäuse (16) einsetzbar sind.
